# FASCICULE DE BREVET EUROPEEN

(11) **EP 1 972 366 B1**
(45) Date de publication et mention de la délivrance du brevet: **31.08.2011**
(21) Numéro de dépôt: 08102542.1
(22) Date de dépôt: 12.03.2008
(51) Int. Cl.: B01D 35/153, B01D 35/16

(54) **Filtre à liquide pour moteur à combustion interne**
Flüssigkeitsfilter für Verbrennungsmotor
Liquid filter for an internal combustion engine

(30) Priorité: 14.03.2007 FR 0701843
(43) Date de publication de la demande: 24.09.2008
(73) Titulaire: FILTRAUTO, 78280 Guyancourt (FR)
(72) Inventeur: GUILLON, Olivier, 78280 GUYANCOURT (FR); MORICEAU, Raphaël, 78990 ELANCOURT (FR); FAUCHEUX, Jérôme, 14500 VIRE (FR)
(74) Mandataire: Cabinet Plasseraud

(56) Documents cités:
- EP-A1- 1 327 471
- DE-U1- 29 915 843
- JP-A- 2003 320 206

## Description

La présente invention se rapporte aux filtres à liquide pour moteur à combustion interne.

Plus particulièrement, l'invention concerne, parmi ces filtres à liquide, ceux qui comprennent :
- une embase qui présente un axe central et qui comprend un fond à partir duquel s'étend axialement une paroi annulaire,
- un couvercle adapté pour être fixé sur la paroi annulaire de l'embase en délimitant avec celle-ci une chambre de filtration fermée,
- une entrée de liquide communiquant avec la chambre de filtration,
- un canal de sortie de liquide ménagé dans l'embase et qui comprend un orifice de sortie centré sur l'axe central et communiquant avec la chambre de filtration,
- un canal de vidange ménagé dans l'embase et qui comprend un orifice de vidange centré sur l'axe central et mettant en communication le canal de sortie de liquide avec le canal de vidange,
- un élément filtrant amovible disposé dans la chambre de filtration, cette élément filtrant étant centré sur l'axe central de l'embase, l'élément filtrant présentant par ailleurs un puits central et comprenant à ses extrémités axiales un flasque d'étanchéité inférieur de forme annulaire et un flasque d'étanchéité supérieur, et
- un obturateur de vidange disposé suivant l'axe central de l'embase, qui comprend une première portion d'extrémité à partir de laquelle s'étend radialement une collerette annulaire et qui comprend une deuxième portion d'extrémité portant au moins un moyen d'étanchéité, ledit obturateur étant monté coulissant entre :
   - une position basse dans laquelle la première portion d'extrémité coopère de façon étanche, d'une part, avec le flasque d'étanchéité inférieur de l'élément filtrant pour assurer la communication entre le puits central de l'élément filtrant et le canal de sortie de liquide, et pour assurer une étanchéité entre le puits central de l'élément filtrant et l'entrée de liquide, et d'autre part, avec l'embase pour assurer l'étanchéité entre l'entrée de liquide et le canal de sortie de liquide, et dans laquelle la deuxième portion d'extrémité obture à l'aide dudit moyen d'étanchéité l'orifice de vidange réalisé dans l'embase, et
   - une position haute dans laquelle au moins la deuxième portion d'extrémité ouvre l'orifice de vidange en permettant la vidange de la chambre de filtration dans le canal de vidange.

Dans les filtres à liquide de ce type, tel que celui décrit dans FR 2 834 650, la collerette annulaire qui s'étend depuis la première portion d'extrémité de l'obturateur de vidange est flexible et élastiquement déformable. Lorsque l'obturateur de vidange est déplacé axialement vers une position basse pour obturer le canal de vidange la collerette flexible se déforme au contact d'un élément annulaire formé sur le fond de l'embase pour assurer un contact étanche entre la première portion d'extrémité de l'obturateur de vidange et le fond de l'embase.

Dans FR 2 834 650, l'étanchéité entre la première portion d'extrémité de l'obturateur de vidange et le flasque inférieur de l'élément filtrant est quant à elle réalisée par une deuxième collerette qui s'étend radialement vers l'extérieur à partir de la première portion d'extrémité. Un ressort de compression disposé axialement entre le couvercle et l'élément filtrant pousse l'élément filtrant vers le fond du boîtier de filtre, les 2 collerettes à distance axiale l'une de l'autre se trouvent alors comprimées axialement entre l'élément filtrant et le fond du boîtier de filtre.

On comprend donc qu'il existe un certain risque que les deux collerettes, sans contre appui axial au voisinage de leur périphérie externe et sous l'effet du ressort de compression précité qui pousse l'élément filtrant, se déforment au-delà de leur limite élastique provoquant au niveau des collerettes des fuites depuis l'entrée de liquide vers le canal de sortie de liquide. Au fil du temps, et notamment dû fait des contraintes de température dues à la température du liquide à filtrer réchauffé par le moteur à combustion interne, et notamment lorsque celui-ci est de l'huile, l'élasticité des collerettes va diminuer et sous l'effet des contraintes de pressions importantes les deux collerettes peuvent également se casser.

La présente invention à notamment pour but de pallier cet inconvénient et d'améliorer et de simplifier les dispositifs de vidange des filtres à liquide.
A cet effet, selon l'invention, un filtre à liquide du genre en question est caractérisé en ce qu'une seule collerette annulaire qui s'étend radialement vers l'extérieur à partir de la première portion d'extrémité de l'obturateur est, lorsque l'obturateur est en position basse, compressée axialement, selon deux lignes de contact circulaires, entre le flasque d'étanchéité inférieur de l'élément filtrant et le fond de l'embase du filtre à liquide, la première ligne de contact circulaire étant réalisée entre la collerette annulaire et le fond de l'embase pour obtenir un contact étanche entre la collerette annulaire et le fond, et la deuxième ligne de contact circulaire étant réalisée entre le flasque inférieur de l'élément filtrant et la collerette annulaire pour obtenir un contact étanche entre le flasque inférieur de l'élément filtrant et la collerette annulaire.

Grâce à ces dispositions, la collerette annulaire est maintenue axialement entre deux appuis circulaires évitant ainsi toutes déformations de la collerette.

En outre, les lignes de contact circulaires sont continues et permettent de réaliser efficacement l'étanchéité de chaque contact. En effet et par comparaison à une surface de contact étendue, chaque contact circulaire selon la présente invention est réalisé par une ligne de contact circulaire, c'est à dire que la surface de contact est réalisée par une ligne de contact de faible largeur qui s'étend de manière circulaire, la largeur de chaque ligne de contact circulaire est inférieure à environ 5 millimètres et de préférence est inférieure à environ 3 millimètres. La largeur étroite de chaque ligne de contact circulaire permet d'obtenir localement une plus forte pression de contact ce qui améliore considérablement les étanchéités entre d'une part la collerette annulaire et le fond de l'embase et d'autre part entre la collerette annulaire et le flasque inférieur de l'élément filtrant.

Dans des modes de réalisation préférés de l'invention, on peut éventuellement avoir recours en outre à l'une et / ou à l'autre des dispositions suivantes :
- la collerette annulaire est formée d'une seule pièce avec l'obturateur qui est réalisé en matière thermoplastique,
- l'obturateur s'étend uniquement sous le flasque d'étanchéité inférieur de l'élément filtrant et est exempt de toute extension axiale entre les deux flasques d'étanchéité de l'élément filtrant, ceci pour ne pas obstruer le puits central de l'élément filtrant pouvant gêner la circulation du liquide et pour simplifier l'obturateur de vidange,
- la collerette annulaire est rigide,
- l'obturateur et la collerette sont en polyamide et l'épaisseur de la collerette suivant l'axe central est comprise entre environ 2 et 5 millimètres,
- la ligne de contact circulaire, entre l'élément filtrant et la collerette annulaire, est obtenue par un bourrelet annulaire ou bossage annulaire qui s'étend axialement depuis le flasque inférieur de l'élément filtrant et qui vient contacter une surface supérieure plane de la collerette annulaire, et dans lequel la ligne de contact circulaire, entre le fond de l'embase et la collerette annulaire, est obtenue par un bourrelet annulaire ou bossage annulaire qui s'étend axialement depuis le fond de l'embase et qui vient contacter une surface inférieure plane de la collerette annulaire.
- Dans une variante de réalisation, la ligne de contact circulaire, entre l'élément filtrant et la collerette annulaire, est obtenue par un bourrelet annulaire qui s'étend axialement depuis la surface supérieure de la collerette annulaire et qui vient contacter une surface plane du flasque inférieur de l'élément filtrant, et dans lequel la ligne de contact circulaire, entre le fond de l'embase et la collerette annulaire, est obtenue par un bourrelet annulaire qui s'étend axialement depuis la surface inférieure de la collerette annulaire et qui vient contacter une surface plane de l'embase,
- dans une autre variante de réalisation les bourrelets annulaires qui s'étendent axialement depuis la collerette annulaire sont constitués d'une résine thermoplastique appliquée dans deux rainures annulaires formées de part et d'autre de la collerette annulaire,
- la résine thermoplastique constituant les deux bourrelets annulaires est une résine thermoplastique collante à chaud qui est adaptée pour fluer sous contrainte à partir d'une température limite comprise entre 50 et 150°C,
- la résine thermoplastique est à base de copolyamide,
- dans une autre variante de réalisation les bourrelets annulaires qui s'étendent axialement depuis la collerette annulaire sont constitués d'un élastomère thermodurcissable appliqué par surmoulage dans deux rainures annulaires formées de part et d'autre de la collerette annulaire,
- l'élastomère constituant les deux bourrelets annulaires est un caoutchouc de type nitrile hydrogéné (HNBR),
- les deux rainures annulaires de la collerette annulaire sont reliés par des trous débouchant.
- l'obturateur de vidange est sollicité axialement vers la position haute par un ressort de compression disposé autour de l'obturateur de vidange et interposé axialement entre une coupelle annulaire fixée à l'intérieur du canal de sortie de liquide et la collerette annulaire de l'obturateur de vidange,
- l'obturateur comprend au moins deux doigts flexibles qui s'étendent axialement et/ou radialement depuis la deuxième portion d'extrémité, les extrémités libres des doigts flexibles venant contacter, dans la positon haute de l'obturateur de vidange, la coupelle annulaire d'un côté qui, suivant l'axe central, est opposé au ressort de compression,

D'autres caractéristiques et avantages de l'invention apparaîtront au cours de la description suivante d'un de ses modes de réalisation, donnée à titre d'exemple non limitatif, en regard des dessins joints.

Sur les dessins :
- la figure 1 est une vue en coupe verticale suivant l'axe central d'un filtre à liquide selon un premier mode de réalisation de l'invention, en position d'utilisation du filtre pour laquelle l'obturateur de vidange est en position basse,
- la figure 2 est une vue en coupe verticale décalée par rapport à l'axe central du filtre à liquide représenté sur la figure 1,
- la figure 3 est une vue en coupe verticale suivant l'axe central du filtre à liquide représenté sur la figure 1, dans une position de maintenance pour laquelle le couvercle et l'élément filtrant sont retirés et pour laquelle l'obturateur de vidange est en position haute,
- la figure 4 est une vue en perspective de l'obturateur du filtre représentés sur les figures 1 à 3,
- la figure 5 est une vue de détail en coupe verticale de l'obturateur de vidange tel que représenté sur les figures 1 à 4,
- la figure 6 est une vue de détail en coupe verticale de l'obturateur de vidange selon un deuxième mode de réalisation de l'invention,
- la figure 7 est une vue de détail en coupe verticale de l'obturateur de vidange selon un troisième mode de réalisation de l'invention,
- la figure 8 est vue de dessus de l'obturateur de vidange seul selon le troisième mode de réalisation représenté en figure 7.
- la figure 9 est une vue de détail en coupe montrant la section deux bourrelets annulaires d'étanchéité formé sur la collerette annulaire de l'obturateur de vidange et reliés l'un à l'autre selon le troisième mode de réalisation de l'invention tel que représenté en figure 7,
- la figure 10 est une vue de détail en coupe montrant deux rainures annulaires formées dans la collerette annulaire et destinées à recevoir les deux bourrelets d'étanchéité de la figure 9.

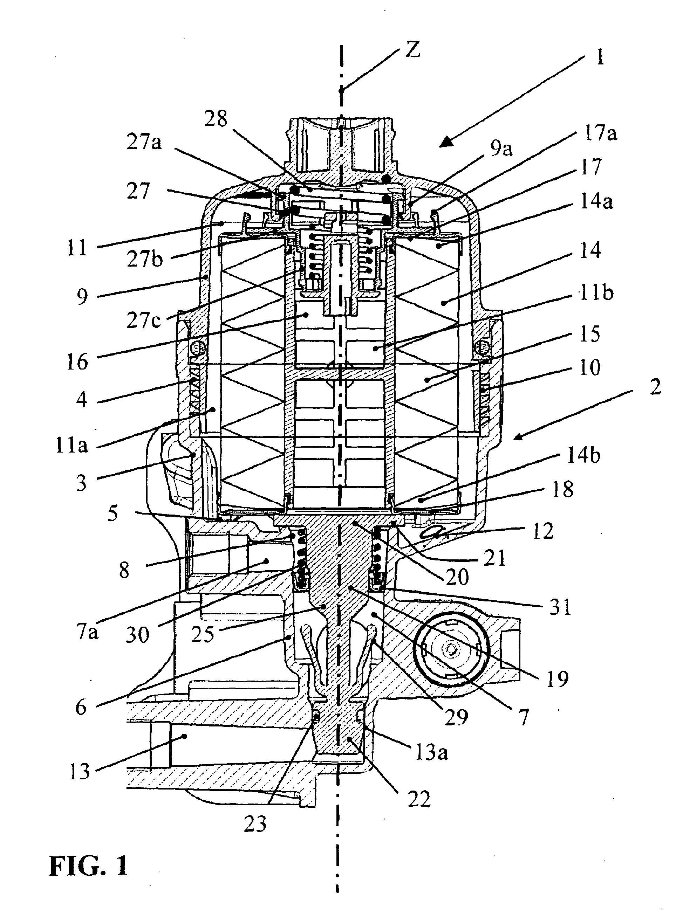

Selon un premier mode de réalisation de l'invention représenté aux figures 1 à 5, le filtre à liquide 1 comporte une embase 2 qui forme une cuve cylindrique de révolution centrée sur un axe central Z sensiblement vertical ou faiblement incliné par rapport à la vertical. Par faiblement incliné on entend selon la présente invention que l'axe central Z est incliné d'un angle inférieur à environ 45° par rapport à la verticale.

La cuve comportant :
- une paroi latérale annulaire 3 qui s'étend axialement jusqu'à une extrémité dotée d'un filetage interne 4, et
- un fond 5 qui est prolongé vers le bas par un appendice inférieur 6 qui délimite intérieurement une conduite de sortie de liquide 7 à partir de laquelle s'étend perpendiculairement une conduite de sortie latérale 7a qui débouche latéralement de l'appendice inférieur 6,
- le canal de sortie de liquide 7 débouche également à l'intérieur de la cuve 2 par un orifice de sortie 8 réalisé sur le fond 5 et centré sur l'axe central Z.

A l'extrémité supérieure ouverte de la paroi annulaire 3 de la cuve, est vissé un couvercle 9 qui comporte un filetage 10 complémentaire du filetage interne 4 de la cuve.

Lorsque le couvercle 9 est vissé sur l'embase 2, il délimite avec la cuve une chambre de filtration 11 fermée, qui communique avec l'extérieur uniquement par l'intermédiaire :
- d'une entrée de liquide 12 qui, dans une position excentrée par rapport à l'axe central Z, débouche sur le fond 5 de la cuve, et
- du canal de sortie de liquide 7 susmentionné, lequel communique en partie inférieure avec un canal de vidange 13 ménagé également dans l'appendice inférieur 6 de l'embase et qui comprend un orifice de vidange 13a centré sur l'axe central Z et formé dans le prolongement axial de la conduite de sortie de liquide 7.

Le filtre comprend également un élément filtrant annulaire 14 qui délimite un puits central 16 formant une zone aval 11b de l'élément filtrant par rapport au sens d'écoulement du liquide. Cet élément filtrant 14 s'étend axialement entre une extrémité supérieure 14a située à proximité du couvercle 9 et une extrémité inférieure 14b voisine du fond 5 de la cuve 2. Les extrémités supérieure 14a et inférieure 14b de l'élément filtrant 14 sont fixées de manière étanche respectivement à un flasque supérieur annulaire 17 et à un flasque inférieur annulaire 18.

L'élément filtrant 14 peut, par exemple, être constitué en papier plissé 15, c'est-à-dire plié selon des lignes en zig-zag qui s'étendent selon une direction axiale. Le papier plissé 15 est conformé en anneau pour donner la forme annulaire de l'élément filtrant 14.

Chaque flasque d'étanchéité 17, 18 peut être, par exemple, formé par une rondelle rapportée qui est réalisée :
- en matière plastique,
- en tôle métallique, ou
- constitué d'un feutre non-tissé de matière synthétique
et qui est fixée, de manière étanche, à l'aide d'un liant à chaque extrémité axiale 14a et 14b de l'élément filtrant annulaire 14. S'agissant d'un flasque d'étanchéité 17, 18 rapporté en matière plastique ou constitué d'un feutre non-tissé celui-ci peut-être assemblé à chaque extrémité axiale 14a et 14b de l'élément filtrant annulaire 14 par fusion partielle de la matière constitutive du flasque d'étanchéité 17, 18.

Chaque flasque 17 ou 18 peut également être réalisé par une résine thermoplastique collante à chaud ("hot melt"). Il peut s'agir par exemple de la résine commercialisée sous la marque "THERMELT 193", vendue par la société française TRL. La résine thermoplastique utilisée peut-être à base de copolyamide présentant de préférence un point de ramollissement compris entre 50 et 250°C et adaptée pour fluer sous contrainte à partir d'une température limite comprise entre 50 et 150°C (notamment environ 100°C). La résine thermoplastique est appliquée à chaud, lorsque la résine est dans un état visqueux ou liquide, directement aux extrémités axiales 14a, 14b de l'élément filtrant 14. En se refroidissant la résine thermoplastique emprisonne les fibres et les plis du papier filtrant 15 pour réaliser une parfaite étanchéité axiale entre papier plissé 15 et flasques 17, 18.

Suivant la nature des plis du papier plissé 15, l'élément filtrant 14 peut également comprendre une armature intérieure ajourée 14c de façon à supporter et maintenir le papier 15 plissé et conformé en anneau de l'élément filtrant 14.

Dans la chambre de filtration 11, l'extérieur de élément filtrant 14 délimite avec la cuve de filtre une zone 11a, qui par rapport au sens d'écoulement du liquide, est située en amont de l'élément filtrant 14. Cette zone d'amont 11a communique directement avec l'entrée de liquide 12.

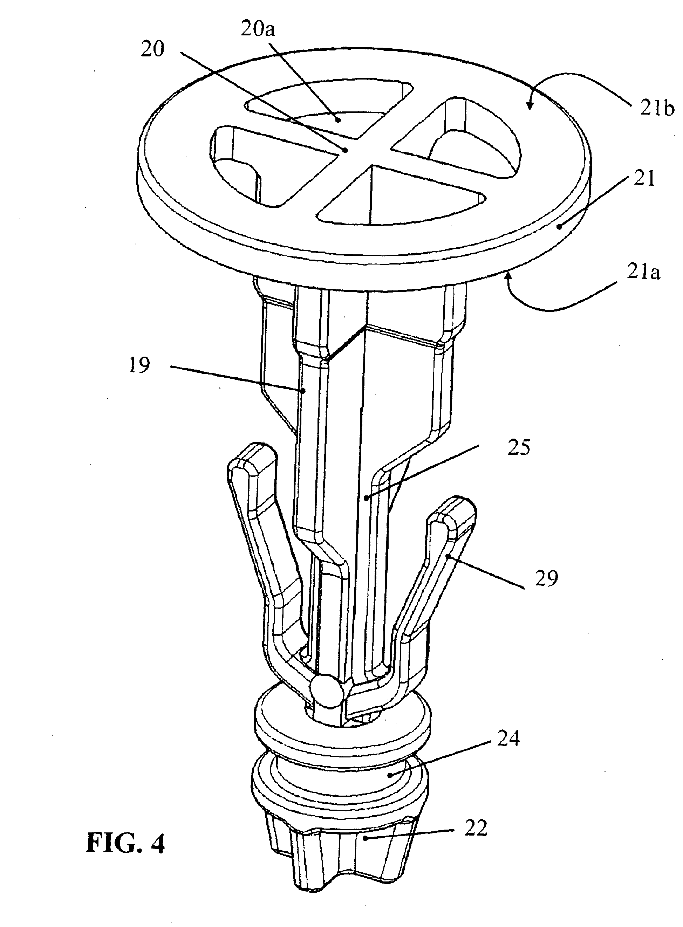

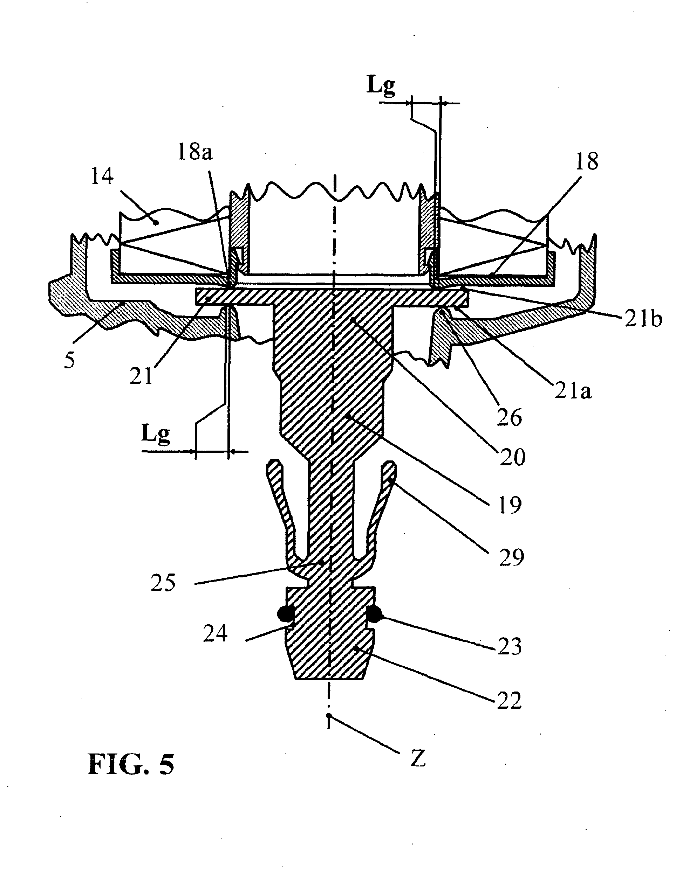

Le filtre 1 comporte en outre un obturateur de vidange 19, avantageusement moulé en matière plastique par exemple en polyamide chargé de fibres de verre (PA 6.6 fv), qui est bien visible sur les figures 4 & 5.

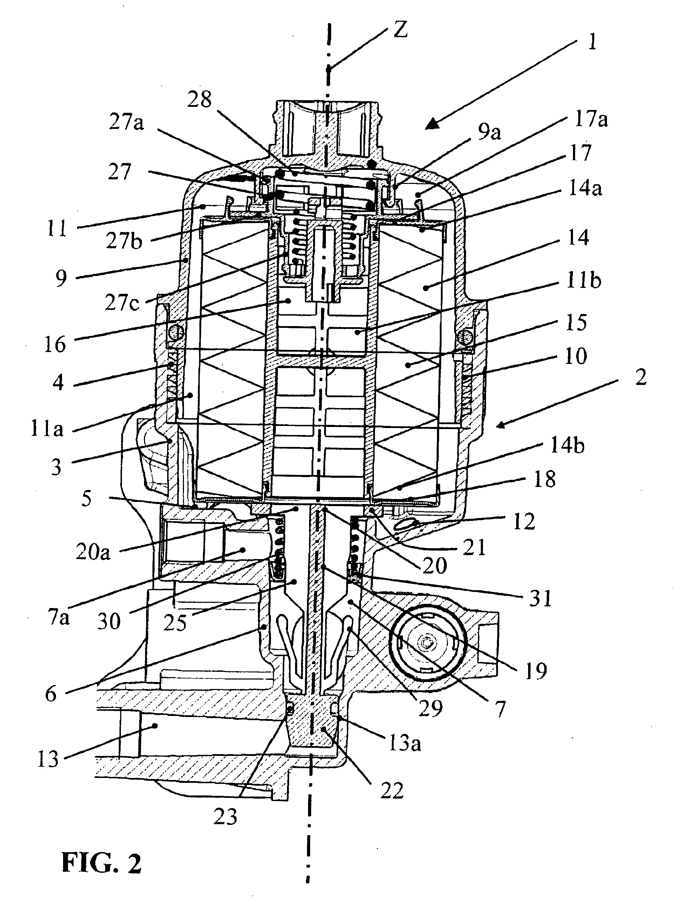

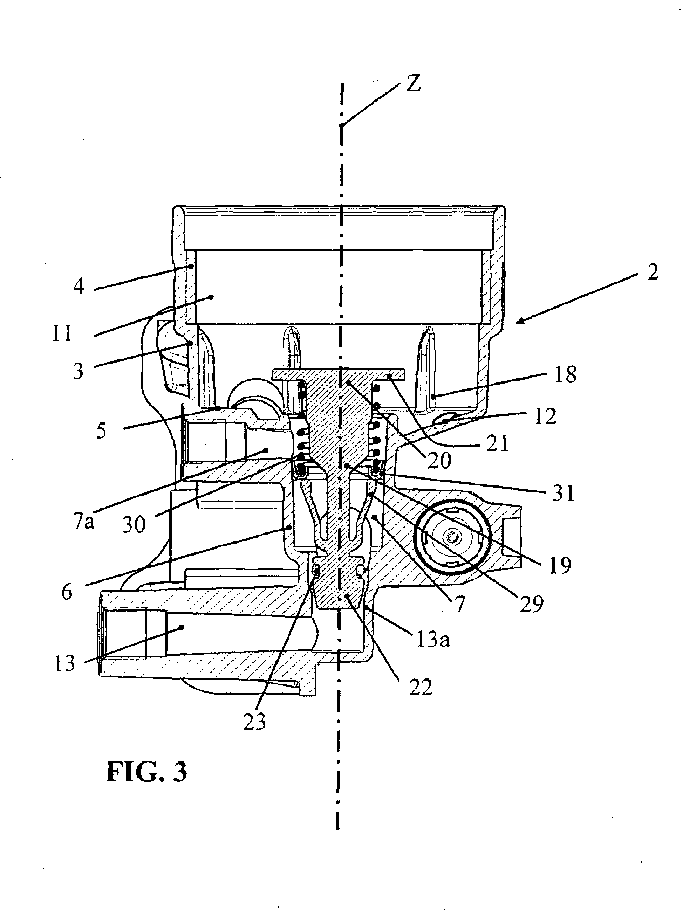

L'obturateur 19 est monté coulissant, selon l'axe central Z, à l'intérieur du canal de sortie de liquide 7 entre une position basse (figures 1 & 2) et une position haute (Figure 3).

Cet obturateur de vidange 19 présente une première portion d'extrémité 20 à partir de laquelle s'étend radialement une collerette annulaire 21 et une deuxième portion d'extrémité 25 se présentant sous la forme d'une tige à section cruciforme qui s'étend selon l'axe central Z du filtre. La deuxième portion d'extrémité 25 de l'obturateur 19 s'étend jusqu'à une extrémité inférieure 22 formant un bouchon adapté pour obturer le canal de vidange 13 ou plus exactement pour obturer l'orifice de vidange 13a lorsque ledit obturateur 19 est en position basse d'utilisation (figures 1 et 2). Le bouchon 22 porte un joint torique 23 qui est disposé dans une rainure extérieure 24 du bouchon 22. Le joint torique 23 permet de réaliser une étanchéité radiale entre l'extrémité inférieure 22 et l'alésage cylindrique ou en tronc de cône formant l'orifice de vidange 13a.

La collerette annulaire 21 est adaptée pour assurer l'étanchéité entre :
- le puits central 16 de l'élément filtrant 14 prolongé par le canal de sortie de liquide 7, et
- la zone d'amont 11a communiquant avec l'entrée de liquide 12.

Radialement entre la collerette annulaire 21 et l'axe central Z de l'obturateur de vidange 19 sont formés dans la première portion d'extrémité 20 des orifices 20a (figures 2 et 4) pour établir une communication de liquide entre le puits central 16 et le canal de sortie 7.

La collerette annulaire 21 prend appui sur un bourrelet annulaire en saillie 26 (figure 5) réalisé sur le fond 5 de l'embase 2 lorsque l'obturateur 19 est position basse. Le bourrelet annulaire 26 forme une ligne de contact circulaire qui vient contacter la surface inférieure plane 21a (figures 4 & 5) de la collerette annulaire 21 pour permettre de réaliser une parfaite étanchéité entre l'embase et la collerette annulaire 21.

Comme on peut le voir sur la figure 1, le couvercle 9 comprend des moyens de sollicitation élastique qui sollicitent constamment et axialement l'élément filtrant 14 en direction du fond 5 de la cuve afin de comprimer axialement, selon l'axe central Z, la collerette 21 entre le bourrelet annulaire 26 de l'embase 2 et le flasque d'étanchéité inférieur 18 de l'élément filtrant 14.

Afin d'assurer une étanchéité parfaite entre l'entrée de liquide 12 et le canal de sortie de liquide 7, l'étanchéité entre élément filtrant 14 et la collerette annulaire 21 est également réalisée par un bourrelet annulaire ou bossage annulaire 18a (figure 5) qui s'étend axialement depuis le flasque inférieur 18 de l'élément filtrant et qui forme une ligne de contact circulaire venant contacter la surface supérieure plane 21b (figures 4 & 5) de la collerette annulaire 21.

Lorsque le couvercle 9 est vissé sur l'embase 2, la collerette annulaire 21 est donc maintenue comprimée axialement entre l'élément filtrant 14 et le fond 5 de l'embase 2 par deux lignes de contact circulaires continues qui permettent de préserver une parfaite étanchéité entre l'entrée de liquide 12 et le canal de sortie de liquide 7.

Les lignes de contacts circulaires sont étroites et continues et permettent de réaliser efficacement l'étanchéité de chaque contact, c'est à dire d'une part celui établi entre la collerette annulaire 21 et le flasque inférieur 18 de l'élément filtrant et d'autre part celui établi entre la collerette annulaire 21 et le fond 5 de l'embase. En effet, chaque ligne de contact circulaire selon la présente invention a une faible largeur **Lg** qui n'excède pas 5 millimètres et de préférence qui n'excède pas 3 millimètres. Par comparaison à une surface de contact étendue, la faible largeur **Lg** de chaque ligne de contact circulaire permet d'obtenir localement une plus forte pression de contact ce qui améliore considérablement les étanchéités des contacts entre d'une part la collerette annulaire 21 et le fond 5 de l'embase 2 et d'autre part entre la collerette annulaire 21 et le flasque inférieur 18 de l'élément filtrant 14.

Le maintien axial de la collerette annulaire 21 entre les deux appuis circulaires évitent en outre que cette dernière ne se déforme et génère des fuites entre l'entrée de liquide 12 et le canal de sortie de liquide 7.

Les moyens de sollicitation élastique du couvercle 9 comprennent par exemple une bague cylindrique 27 qui s'étend axialement et qui se termine par un rebord radialement extérieur 27a propre à coopérer aux fins d'accrochage avec des crochets élastiques 9a solidaires du couvercle 9. La bague 27 sert de logement à un ressort hélicoïdal de compression 28 interposé entre la portion intérieure de la bague 27 et le fond du couvercle 9. La bague 27 comprend également une collerette 27b qui s'étend radialement vers l'extérieur et qui prend appui sur le flasque supérieur 17 de l'élément filtrant 14 pour le repousser axialement vers le fond 5 de la cuve 2. La bague 27 comprend également une portion inférieure 27c qui s'engage dans une ouverture centrale délimitée par le flasque supérieur annulaire 17 de l'élément filtrant 14. La collerette 27b de la bague 27 assure l'étanchéité entre le passage d'entrée de liquide 12 et l'extrémité supérieure du puits central 16 délimité par l'élément filtrant 14.

Un ressort de compression 30 est disposé autour de l'obturateur de vidange 19 et est interposé axialement entre d'une part la surface supérieure d'une coupelle annulaire 31 fixée à l'intérieur du canal de sortie de liquide 7 et d'autre part la collerette annulaire 21 de l'obturateur 19.

Le ressort de compression 30 sollicite axialement l'obturateur de vidange 19 vers la position haute.

L'obturateur 19 comporte également, au moins deux doigts de butée 29 flexibles qui s'étendent radialement et axialement vers l'extérieur et vers le haut depuis la deuxième portion d'extrémité et qui sont engagés à l'intérieur du canal de sortie de liquide 7.

Grâce à ces dispositions, lorsque l'on visse le couvercle 9 sur la cuve 2, les moyens de sollicitation élastique 28 du couvercle 9 repoussent axialement vers le bas l'élément filtrant 14, celui-ci vient par le bourrelet annulaire 18a formé sur le flasque inférieur 18 contacter la collerette annulaire 21 de l'obturateur, puis l'élément filtrant vient repousser à son tour l'obturateur 19 vers la position basse. Suite à une première course axiale de l'obturateur 19 vers la position basse, le joint torique d'étanchéité 23 disposé autour de l'extrémité inférieure 22 vient contacter radialement un alésage cylindrique de l'orifice de vidange 13a pour fermer le canal de vidange 13. Puis lorsque l'élément filtrant 14 continue à descendre vers le bas, l'obturateur 19 est repoussé vers le bas jusqu'à ce que la collerette annulaire 21 vienne contacter axialement le bourrelet annulaire 26 du fond 5 de l'embase 2. Lorsque le couvercle 9 est fermé, l'obturateur 19 est en position basse, il obture l'orifice de vidange 13a et la collerette annulaire 21 est comprimée axialement entre l'élément filtrant 14 et le fond 5 de l'embase par 2 lignes de contacts circulaires continues permettant ainsi de préserver une parfaite étanchéité entre l'entrée de liquide 12 et le canal de sortie de liquide 7.

A l'inverse, (figure 3) lorsqu'on dévisse le couvercle 9 en enlevant simultanément l'élément filtrant 14 au moyen de crochets 17a réalisés sur le flasque supérieur 17 et qui coopèrent avec la rondelle 27b de la bague cylindrique 27, le ressort de compression 30 déplace par un mouvement de translation l'obturateur de vidange 19 vers le haut (vers la position haute), de sorte que le bouchon 22 qui porte le joint d'étanchéité torique 23, se libère par un mouvement de translation de l'alésage cylindrique de l'orifice de vidange 13a pour ouvrir le canal de vidange 13. Le déplacement axial de l'obturateur 19 permet également de rompre l'étanchéité entre la collerette annulaire 21 et le bourrelet annulaire 26 de l'embase 2, ce qui permet de mettre en communication directe les zones amont 11a et aval 11b et de vider complètement la chambre de filtration 11 du liquide résiduelle qu'elle contient par le canal de vidange 13.

De plus, au cours du mouvement d'enlèvement du couvercle 9 et de l'élément filtrant 14, les doigts élastiques 29 de l'obturateur 19 viennent en butée sous la coupelle annulaire 31 (figure 3) qui est emmanchée en force ou sertie à l'intérieur du canal de sortie de liquide 7, de sorte que l'obturateur 19 reste fixé à l'embase 2 lorsque l'élément filtrant 14 est retiré. Lorsque après la vidange du circuit d'huile du véhicule, on remet en place un nouvel élément filtrant 14. Par son flasque inférieur 18 ce nouvel élément filtrant 14 vient contacter la surface supérieure 21b de la collerette annulaire 21 pour repousser l'obturateur 19 vers l'orifice de vidange 13a. Lors du vissage du couvercle 9, le bouchon 22 de l'obturateur 19 muni du joint d'étanchéité torique 23 s'engage à nouveau dans l'orifice 13a du canal de vidange 13 en le fermant.

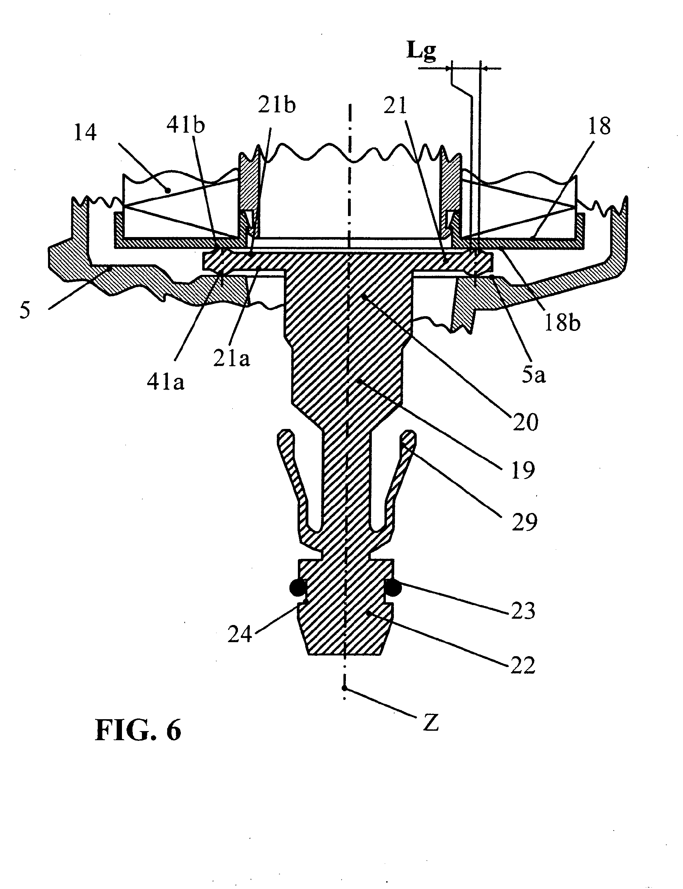

Avantageusement, dans un deuxième mode de réalisation de l'invention (figure 6), les bourrelets annulaires d'étanchéité permettant de réaliser l'étanchéité d'une part entre le flasque inférieur 18 de l'élément filtrant et la collerette annulaire 21 et d'autre part entre la collerette annulaire 21 et le fond 5 de l'embase ne s'étendent plus depuis le flasque inférieur 18 et depuis le fond 5 de l'embase mais s'étendent tous deux (41a, 41b) axialement de part et d'autre de la collerette annulaire 21, depuis les surfaces inférieure 21a et supérieure 21b de la collerette, et sont venus de matière avec l'obturateur 19 réalisé d'injection plastique.

Les bourrelets annulaires 41a, 41b sont formés sur la collerette annulaire 21 de telle sorte qu'en position basse de l'obturateur 19 lorsque le couvercle 9 est fermé et que l'élément filtrant 14 pousse l'obturateur 19 en butée axiale sur le fond 5 de l'embase 2, le bourrelet annulaire 41b faisant saillie depuis la surface supérieure 21b de la collerette annulaire 21 vient établir un contact circulaire étanche avec une surface plane 18b du flasque inférieur 18 de l'élément filtrant 14 et le bourrelet annulaire 41a faisant saillie depuis la surface inférieure 21a de la collerette annulaire 21 vient établir un contact circulaire avec une surface plane 5a formée sur le fond 5 de l'embase 2. Lorsque le corps de filtre est par exemple en aluminium la surface plane 5a formée sur le fond 5 de l'embase est, par exemple, obtenue par usinage plus précisément par un dressage d'une surface en saillie depuis le fond 5. Lorsque le corps de filtre est en matière plastique la surface plane 5a est obtenue brut d'injection plastique.

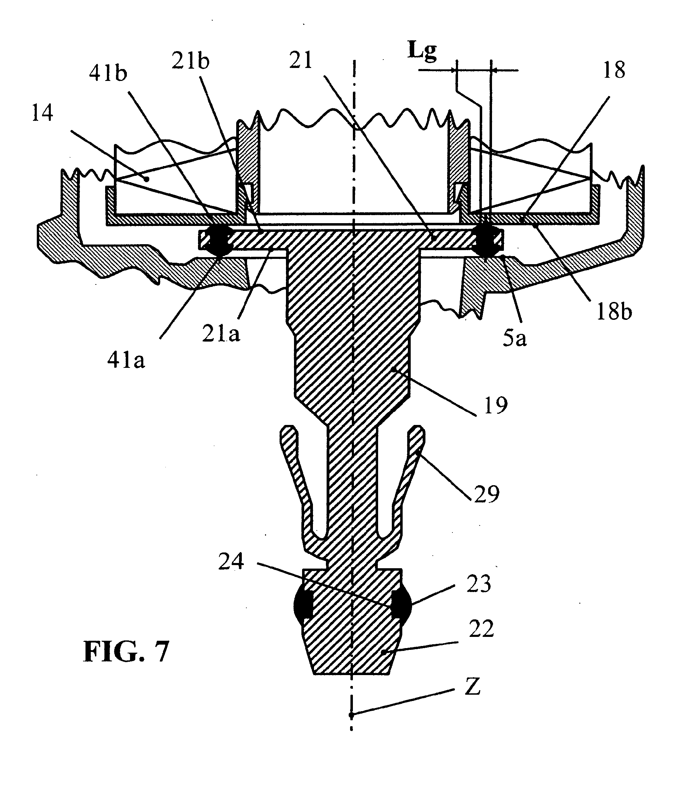

Dans une autre variante de réalisation qui constitue un troisième mode de réalisation de l'invention (figures 7, 8, 9 & 10), les deux bourrelets annulaires d'étanchéité 41a, 41b bourrelets annulaires qui s'étendent axialement depuis la collerette annulaire 21 sont constitués d'une résine thermoplastique appliquée dans deux rainures annulaires 42a, 42b formées de part et d'autre de la collerette annulaire 21. La résine thermoplastique utilisée pour réaliser les deux bourrelets annulaires d'étanchéité 41a, 41b est une résine thermoplastique collante à chaud ("hot melt"). Il peut s'agir, par exemple, de la résine commercialisée sous la marque "THERMELT 193", vendue par la société française TRL. La résine thermoplastique utilisée peut-être à base de copolyamide présentant de préférence un point de ramollissement compris entre 50 et 250°C et adaptée pour fluer sous contrainte à partir d'une température limite comprise entre 50 et 150°C (notamment environ 100°C).

L'emploi de la résine thermoplastique précitée est particulièrement adapté lorsque le liquide à filtrer est de l'huile. En effet, lorsque l'élément filtrant 14 poussé par le ressort de compression 28, interposé entre le couvercle 9 et l'élément filtrant 14, vient comprimer axialement la collerette annulaire 21 contre le fond 5 de l'embase, les bourrelets annulaires 41a, 41b s'aplatissent par effet de fluage du fait de la contrainte de compression exercée par le ressort 28 et de la température élevée de l'huile à filtrer chauffé par le moteur (classiquement de l'ordre de 100 à 150°C). Il en résulte un contact intime entre les bourrelets annulaires 41a, 41b de la collerette annulaire 19 et les surfaces contactées (5a & 5b) par les bourrelets, celle 18b du flasque et celle 5a du fond 5 de l'embase 2. En s'aplatissant de quelques dixièmes de millimètres, les bourrelets annulaires d'étanchéité 41a, 41b en résine thermoplastique vont épouser parfaitement les surfaces 5a, 18b qu'ils contactent et vont permettre l'obtention d'un contact étanche parfait même lorsque les surfaces contactées 5a & 18b par les bourrelets annulaires 41a, 41b ont des défauts de formes tels que notamment une rugosité importante, des aspérités ou encore des défauts de planéité. Par ailleurs, lorsque l'embase 2 est en aluminium, il est possible de se passer d'un usinage consistant à dresser une face plane 5a sur le fond 5 de l'embase 2. En effet, la surface de contact 5a sur le fond 5 de l'embase 2 peut être obtenue, dans le cas présent, brut de fonderie : les défauts de planéité et aspérités de la surface brut étant rattrapés par le bourrelet annulaire 41a en matière thermoplastique qui en épousant la surface de contact 5a et les défauts de forme qu'elle présente permet de garantir l'étanchéité.

On notera que, malgré l'effet de fluage susmentionné, les bourrelets annulaires 41a, 41b formés sur la collerette annulaire 21 réalise toujours des lignes de contact circulaires qui permettent d'augmenter localement la pression de contact pour obtenir une parfaite étanchéité.

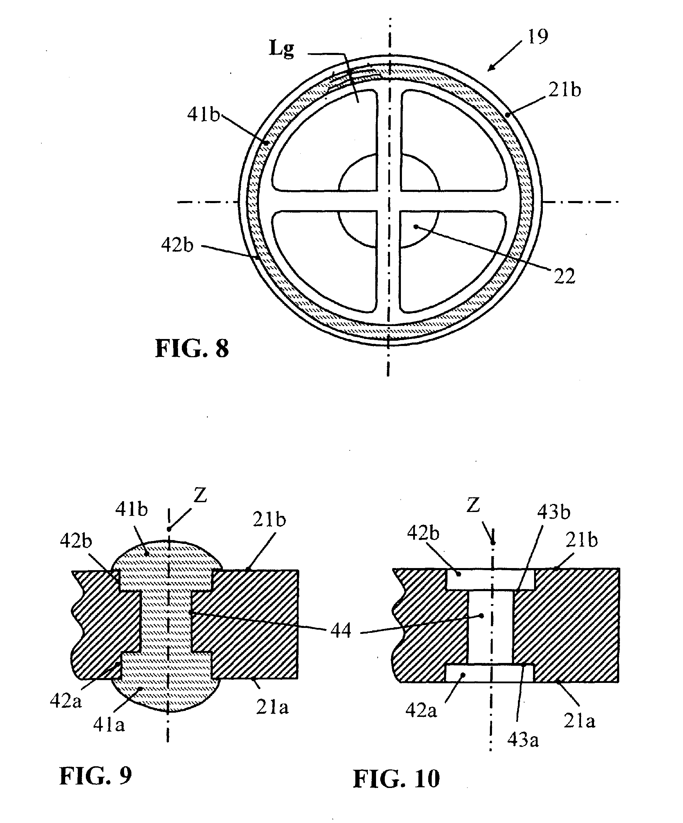

Les deux bourrelets annulaires d'étanchéité 41a, 41b constitués de résine thermoplastique sont appliqués dans les rainures annulaires à chaud et à une température égale ou supérieure à la température de fusion de la résine thermoplastique constituant les bourrelets annulaires d'étanchéité 41a, 41b. Pour améliorer l'accroche des deux bourrelets annulaires 41a, 41b dans les rainures annulaires 42a, 42b de la collerette annulaire, les fonds 43a, 43b des rainures annulaires peuvent être mis en communication à l'aide de trous débouchant 44 (figure 10) de section circulaire. Lorsque la matière thermoplastique constitutive des bourrelets d'étanchéité 41a, 41b est appliquée à chaud et à l'état visqueux dans les rainures annulaires 42a, 42b, la matière thermoplastique pénètre à l'intérieur des trous débouchant 44 de telle sorte qu'après refroidissement les deux bourrelets annulaires 41a, 41b ne forment plus qu'un, c'est à dire un double cordon étanchéité relié sans discontinuité de matière via les trous débouchant 44.

Le joint d'étanchéité 23 disposé dans la rainure 24 formée autour de l'extrémité inférieure 22 peut avantageusement être remplacé par un cordon annulaire constitué de la résine thermoplastique précitée qui est appliquée à chaud dans la rainure 24 de l'extrémité inférieure 22.

Dans un quatrième mode de réalisation de l'invention (cf également figure 7, 8, 9 & 10) et par comparaison au troisième mode de réalisation précédent, les deux bourrelets annulaires d'étanchéité 41a, 41b sont constitués d'un élastomère thermodurcissable appliqué par surmoulage dans chaque rainure annulaire 42a, 42b de la collerette annulaire 21. Dans ce quatrième mode de réalisation de l'invention, les deux bourrelets annulaires 41a, 41b peuvent par exemple être réalisés par un caoutchouc de type nitrile hydrogéné plus connu sous l'abréviation anglaise "HNBR" ("Hydrogenated Nitrile Butadiene Rubber").
Chaque bourrelet d'étanchéité (41a ou 41b) formé par surmoulage est élastiquement déformable et permet de modifier localement sa géométrie en fonction des défauts de formes (rugosité, aspérités, défauts de planéité... ) des surfaces 5a, 18b contactées par les bourrelets 41a, 41b. IL en résulte un contact intime entre les bourrelets annulaires 41a, 41b de la collerette 21 et les surfaces contactées par les bourrelets, celle du flasque 5a et celle 18b du fond 5 de l'embase.

Pour améliorer l'accroche des 2 bourrelets annulaires d'étanchéité 41a, 41b dans les rainures annulaires 42a, 42b de la collerette 21, les fonds 43a, 43b des rainures annulaires 42a, 42b peuvent être également mis en communication à l'aide de trous débouchant 44 (figure 10) de section circulaire.

Le joint d'étanchéité 23 disposé dans la rainure 24 entourant l'extrémité inférieure 22 de l'obturateur 19 peut également être remplacé par un cordon annulaire constitué par un élastomère thermodurcissable appliqué par surmoulage dans la rainure 24 entourant l'extrémité inférieure 22.

## Revendications

1. Filtre à liquide pour moteur à combustion interne, comprenant :
- une embase (2) qui présente un axe central (Z) et qui comprend un fond (5) à partir duquel s'étend axialement une paroi annulaire (3),
- un couvercle (9) adapté pour être fixé sur la paroi annulaire (3) de l'embase (2) en délimitant avec celle-ci une chambre de filtration fermée (11),
- une entrée de liquide (12) communiquant avec la chambre de filtration (11),
- un canal de sortie de liquide (7) ménagé dans l'embase (2) et qui comprend un orifice de sortie (8) centré sur l'axe central (Z) et communiquant avec la chambre de filtration (11)
- un canal de vidange (13) ménagé dans l'embase et qui comprend un orifice de vidange (13a) centré sur l'axe central (Z) et mettant en communication le canal de sortie de liquide (7) avec le canal de vidange (13),
- un élément filtrant amovible (14) disposé dans la chambre de filtration (11), cet élément filtrant étant centré sur l'axe central (z) de l'embase (2), présentant un puits central (16) et comprenant à ses extrémités axiales un flasque d'étanchéité inférieur de forme annulaire (18) et un flasque d'étanchéité supérieur (17), et
- un obturateur de vidange (19) disposé suivant l'axe central (z) de l'embase (2), qui comprend une première portion d'extrémité (20) à partir de laquelle s'étend radialement une collerette annulaire (21) et qui comprend une deuxième portion d'extrémité (25) portant au moins un moyen d'étanchéité (23), ledit obturateur de vidange (19) étant monté coulissant, suivant l'axe central (z), entre :
• une position basse dans laquelle la première portion d'extrémité (20) coopère de façon étanche, d'une part, avec le flasque d'étanchéité inférieur (18) de l'élément filtrant (14) pour assurer la communication entre le puits central (16) dudit élément filtrant et le canal de sortie de liquide (7) et pour assurer une étanchéité entre le puits central (16) de l'élément filtrant (14) et l'entrée de liquide (12), et d'autre part, avec l'embase (2) pour assurer l'étanchéité entre l'entrée de liquide (12) et le canal de sortie de liquide (7), et dans laquelle la deuxième portion d'extrémité (25) obture à l'aide dudit moyen d'étanchéité (23) l'orifice de vidange (13a) réalisé dans l'embase (2), et
• une positon haute dans laquelle au moins la deuxième portion d'extrémité (25) ouvre l'orifice de vidange (13a) en permettant la vidange de la chambre de filtration (11) par le canal de vidange (13),
**caractérisé en ce que** la collerette annulaire (21) qui s'étend depuis la première portion d'extrémité (20) est, en position basse de l'obturateur de vidange (19), compressée axialement, selon deux lignes de contact circulaires, entre le flasque d'étanchéité inférieur (18) de l'élément filtrant (14) et le fond (5) de l'embase (2) du filtre à liquide, la première ligne de contact circulaire étant réalisée entre la collerette annulaire (20) et le fond (5) de l'embase (2) pour obtenir un contact étanche entre la collerette annulaire (21) et le fond (5), et la deuxième ligne de contact circulaire étant réalisée entre le flasque inférieur (18) de l'élément filtrant (14) et la collerette annulaire (21) pour obtenir un contact étanche entre le flasque inférieur (18) de l'élément filtrant (14) et la collerette annulaire (21).

2. Filtre selon la revendication 1, dans lequel les deux lignes de contact circulaires, réalisées entre la collerette annulaire (20) et d'une part le flasque d'étanchéité inférieur (18) de l'élément filtrant (14) et, d'autre part le fond (5) de l'embase (2) du filtre à liquide, sont obtenues par deux bourrelets annulaires ou bossages annulaires qui viennent chacun contacter une surface plane.

3. Filtre selon la revendication 1 ou 2, dans lequel la collerette annulaire (21) est formée d'une seule pièce avec l'obturateur de vidange (19).

4. Filtre selon l'une quelconque des revendications précédentes, dans lequel l'obturateur (19) s'étend uniquement sous le flasque d'étanchéité inférieur (18) de l'élément filtrant (14) et est exempt de toute extension axiale entre les deux flasques (17, 18) de l'élément filtrant.

5. Filtre selon l'une quelconque des revendications précédentes, dans lequel la collerette annulaire (21) est rigide.

6. Filtre selon l'une quelconque des revendications précédentes, dans lequel la ligne de contact circulaire, entre l'élément filtrant (14) et la collerette annulaire (21), est obtenue par un bourrelet annulaire ou bossage annulaire (18a) qui s'étend axialement depuis le flasque inférieur (18) de l'élément filtrant (14) et qui vient contacter une surface supérieure plane de la collerette annulaire (21), et dans lequel la ligne de contact circulaire, entre le fond (5) de l'embase (2) et la collerette annulaire (21), est obtenue par un bourrelet annulaire ou bossage annulaire (26) qui s'étend axialement depuis le fond (5) de l'embase (2) et qui vient contacter une surface inférieure plane de la collerette annulaire (21).

7. Filtre selon l'une quelconque des revendications 1 à 5, dans lequel la ligne de contact circulaire, entre l'élément filtrant (14) et la collerette annulaire (21), est obtenue par un bourrelet annulaire (41b) qui s'étend axialement depuis la surface supérieure (21b) de la collerette annulaire (21) et qui vient contacter une surface plane
(18b) du flasque d'étanchéité inférieur (18) de l'élément filtrant (14), et dans lequel la ligne de contact circulaire, entre le fond (5) de l'embase (2) et la collerette annulaire (21), est obtenue par un bourrelet annulaire (41a) qui s'étend axialement depuis la surface inférieure (21a) de la collerette annulaire (21) et qui vient contacter une surface plane (5a) du fond (5) de l'embase (2).

8. Filtre selon la revendication 7, dans lequel les bourrelets annulaires (41a, 41b) qui s'étendent axialement depuis la collerette annulaire (21) sont constitués d'un matériau appliqué dans deux rainures annulaires (42a, 42b) formées de part et d'autre de la collerette annulaire (21).

9. Filtre selon l'une quelconque des revendications précédentes, dans lequel l'obturateur de vidange (19) est sollicité axialement vers la position haute par un ressort de compression (30) disposé autour de l'obturateur de vidange (19) et interposé axialement entre une coupelle annulaire (31) fixée à l'intérieur du canal de sortie de liquide (7) et la collerette annulaire (21) de l'obturateur de vidange (19).

10. Filtre selon l'une quelconque des revendications précédentes, dans lequel la largeur (Lg) de chaque ligne de contact circulaire est inférieure à 3 millimètres.

## Claims

1. Liquid filter for internal combustion engine, comprising:
- a base (2) which has a central axis (Z) and which comprises a bottom (5) starting from which axially extends an annular wall (3),
- a cover (9) adapted to be fastened on the annular wall (3) of the base (2) by delimiting with the latter a closed filter chamber (11),
- a liquid inlet (12) communicating with the filter chamber (11),
- a liquid outlet channel (7) arranged in the base (2) and which comprises an outlet orifice (8) centred on the central axis (Z) and communicating with the filter chamber (11)
- a drainage channel (13) arranged in the base and which comprises a drainage orifice (13a) centred on the central axis (Z) and putting into communication the liquid outlet channel (7) with the drainage channel (13),
- a removable filtering element (14) arranged in the filter chamber (11), this filtering element being centred on the central axis (Z) of the base (2), having a central well (16) and comprising at its axial ends a lower sealing flange of annular shape (18) and an upper sealing flange (17), and
- a drainage stopper (19) arranged according to the central axis (Z) of the base (2), which comprises a first end portion (20) starting from which radially extends an annular lip (21) and which comprises a second end portion (25) carrying at least one means of sealing (23), said drainage stopper (19) being mounted slidingly, along the central axis (Z), between:
-- a low position wherein the first end portion (20) cooperates in a sealed manner, on the one hand, with the lower sealing flange (18) of the filtering element (14) in order to provide the communication between the central well (16) of said filtering element and the liquid outlet channel (7) and in order to provide a seal between the central well (16) of the filtering element (14) and the liquid inlet (12), and on the other hand, with the base (2) in order to provide the seal between the liquid inlet (12) and the liquid outlet channel (7), and wherein the second end portion (25) stops using said means of sealing (23) the drainage orifice (13a) made in the base (2), and
-- a high position wherein at least the second end portion (25) opens the drainage orifice (13a) by allowing the drainage of the filter chamber (11) via the drainage channel (13),
**characterised in that** the annular lip (21) which extends from the first end portion (20) is, in low position of the drainage stopper (19), compressed axially, according to two lines of circular contact, between the lower sealing flange (18) of the filtering element (14) and the bottom (5) of the base (2) of the liquid filter, the first line of circular contact being made between the annular lip (20) and the bottom (5) of the base (2) in order to obtain a sealed contact between the annular lip (21) and the bottom (5), and the second line of circular contact being made between the lower sealing flange (18) of the filtering element (14) and the annular lip (21) in order to obtain a sealed contact between the lower flange (18) of the filtering element (14) and the annular lip (21) .

2. Filter according to claim 1, wherein the two lines of circular contact, made between the annular lip (20) and on the one hand the lower sealing flange (18) of the filtering element (14) and, on the other hand the bottom (5) of the base (2) of the liquid filter, are obtained by two annular beads or annular bosses which each comes into contact with a planar surface.

3. Filter according to claim 1 or 2, wherein the annular lip (21) is integral with the drainage stopper (19).

4. Filter as claimed in any preceding claim, wherein the stopper (19) extends only under the lower sealing flange (18) of the filtering element (14) and is exempt of any axial extension between the two flanges (17, 18) of the filtering element.

5. Filter as claimed in any preceding claim, wherein the annular lip (21) is rigid.

6. Filter as claimed in any preceding claim, wherein the line of circular contact, between the filtering element (14) and the annular lip (21), is obtained by an annular bead or an annular boss (18a) which extends axially from the lower flange (18) of the filtering element (14) and which comes into contact with a planar upper surface of the annular lip (21), and wherein the line of circular contact, between the bottom (5) of the base (2) and the annular lip (21), is obtained by an annular bead or annular boss (26) which extends axially from the bottom (5) of the base (2) and which comes into contact with a planar lower surface of the annular lip (21).

7. Filter according to any of claims 1 to 5, wherein the line of circular contact, between the filtering element (14) and the annular lip (21), is obtained by an annular bead (41b) which extends axially from the upper surface (21b) of the annular lip (21) and which comes into contact with a planar surface (18b) of the lower sealing flange (18) of the filtering element (14), and wherein the line of circular contact, between the bottom (5) of the base (2) and the annular lip (21), is obtained by an annular bead (41a) which extends axially from the lower surface (21a) of the annular lip (21) and which comes into contact with a planar surface (5a) of the bottom (5) of the base (2).

8. Filter according to claim 7, wherein the annular beads (41a, 41b) which extend axially from the annular lip (21) are constituted of a material applied in the two annular grooves (42a, 42b) formed on either side of the annular lip (21).

9. Filter as claimed in any preceding claim, wherein the drainage stopper (19) is urged axially towards the high position by a compression spring (30) arranged around the drainage stopper (19) and interposed axially between an annular cup (31) fastened to the inside of the liquid outlet channel (7) and the annular lip (21) of the drainage stopper (19).

10. Filter as claimed in any preceding claim, wherein the width (Lg) of each line of circular contact is less than 3 millimetres.

## Patentansprüche

1. Flüssigkeitsfilter für Verbrennungsmotor, umfassend:
- einen Sockel (2), der eine zentrale Achse (Z) und einen Boden (5) aufweist, von dem ausgehend sich axial eine ringförmige Wand (3) erstreckt,
- einen Deckel (9), der an der ringförmigen Wand (3) des Sockels (2) befestigt werden kann und mit diesem eine geschlossene Filterkammer (11) abgrenzt,
- einen Flüssigkeitseingang (12), der mit der Filterkammer (11) kommuniziert,
- einen Flüssigkeitsausgangskanal (7), der in dem Sockel (2) eingerichtet ist und eine Ausgangsöffnung (8) aufweist, die auf der zentralen Achse (Z) zentriert ist und mit der Filterkammer (11) kommuniziert,
- einen Entleerungskanal (13), der in dem Sockel eingerichtet ist und eine Entleerungsöffnung (13a) aufweist, die auf der zentralen Achse (Z) zentriert ist und den Flüssigkeitsausgangskanal (7) mit dem Entleerungskanal (13) in Verbindung setzt,
- ein abnehmbares Filterelement (14), das in der Filterkammer (11) angeordnet ist, wobei dieses Filterelement auf die zentrale Achse (Z) des Sockels (2) zentriert ist und einen zentralen Schacht (16) aufweist und an seinen axialen Enden einen unteren ringförmigen Dichtflansch (18) und einen oberen Dichtflansch (17) aufweist und
- einen Entleerungsverschluss (19), der entlang der zentralen Achse (Z) des Sockels (2) angeordnet ist, der einen ersten Endabschnitt (20) aufweist, von dem ausgehend sich radial ein ringförmiger Kragen (21) erstreckt und der einen zweiten Endabschnitt (25) aufweist, der mindestens ein Dichtmittel (23) trägt, wobei der Entleerungsverschluss (19) entlang der zentralen Achse (Z) gleitend montiert ist zwischen:
• einer unteren Stellung, in der der erste Endabschnitt (20) dicht einerseits mit dem unteren Dichtflansch (18) des Filterelements (14) zusammenwirkt, um die Kommunikation zwischen dem zentralen Schacht (16) des Filterelements und dem Flüssigkeitsausgangskanal (7) sicherzustellen, und um eine Abdichtung zwischen dem zentralen Schacht (16) des Filterelements (14) und dem Flüssigkeitseingang (12) sicherzustellen, und andererseits mit dem Sockel (2), um die Abdichtung zwischen dem Flüssigkeitseingang (12) und dem Flüssigkeitsausgangskanal (7) sicherzustellen, und in der der zweite Endabschnitt (25) mit Hilfe des Dichtmittels (23) die Entleerungsöffnung (13a), die in dem Sockel (2) hergestellt ist, verschließt, und
• einer oberen Stellung, in der mindestens der zweite Endabschnitt (25) die Entleerungsöffnung (13a) öffnet und das Entleeren der Filterkammer (11) durch den Entleerungskanal (13) erlaubt,
**dadurch gekennzeichnet, dass** der ringförmige Kragen (21), der sich von dem ersten Endabschnitt (20) erstreckt, in der unteren Stellung des Entleerungsverschlusses (19) axial entlang zwei kreisförmigen Kontaktlinien zwischen dem unteren Dichtflansch (18) des Filterelements (14) und dem Boden (5) des Sockels (2) des Flüssigkeitsfilters zusammengedrückt wird, wobei die erste kreisförmige Berührungslinie zwischen dem ringförmigen Kragen (20) und dem Boden (5) des Sockels (2) hergestellt ist, um einen dichten Kontakt zwischen dem ringförmigen Kragen (21) und dem Boden (5) zu erzielen, und wobei die zweite kreisförmige Kontaktlinie zwischen dem unteren Flansch (18) des Filterelements (14) und dem ringförmigen Kragen (21) hergestellt ist, um einen dichten Kontakt zwischen dem unteren Flansch (18) des Filterelements (14) und dem ringförmigen Kragen (21) zu erzielen.

2. Filter nach Anspruch 1, bei dem die zwei kreisförmigen Kontaktlinien, die zwischen dem ringförmigen Kragen (21) und einerseits dem unteren Dichtflansch (18) des Filterelements (14) und andererseits dem Boden (5) des Sockels (2) des Flüssigkeitsfilters hergestellt sind, durch zwei ringförmige Wülste oder ringförmige Höcker erzielt werden, die jeweils eine flache Fläche berühren.

3. Filter nach Anspruch 1 oder 2, bei dem der ringförmige Kragen (21) einstückig mit dem Entleerungsverschluss (19) ausgebildet ist.

4. Filter nach einem der vorhergehenden Ansprüche, bei dem sich der Verschluss (19) nur unter dem unteren Dichtflansch (18) des Filterelements (14) erstreckt und keine axiale Erweiterung zwischen den zwei Flanschen (17, 18) des Filterelements aufweist.

5. Filter nach einem der vorhergehenden Ansprüche, bei dem der ringförmige Kragen (21) steif ist.

6. Filter nach einem der vorhergehenden Ansprüche, bei dem die kreisförmige Kontaktlinie zwischen dem Filterelement (14) und dem ringförmigen Kragen (21) durch einen ringförmigen Wulst oder einen ringförmigen Höcker (18a) erzielt wird, der sich axial von dem unteren Flansch (18) des Filterelements (14) erstreckt und eine flache obere Fläche des ringförmigen Kragens (21) berührt, und bei dem die kreisförmige Kontaktlinie zwischen dem Boden (5) des Sockels (2) und dem ringförmigen Kragen (21) durch einen ringförmigen Wulst oder einen ringförmigen Höcker (26) erzielt wird, der sich axial von dem Boden (5) des Sockels (2) erstreckt und eine untere flache Fläche des ringförmigen Kragens (21) berührt.

7. Filter nach einem der Ansprüche 1 bis 5, bei dem die kreisförmige Kontaktlinie zwischen dem Filterelement (14) und dem ringförmigen Kragen (21) durch einen ringförmigen Wulst (41 b) erzielt wird, der sich axial von der obere Fläche (21 b) des ringförmigen Kragens (21) erstreckt und eine flache Fläche (18b) des unteren Dichtflanschs (18) des Filterelements (14) berührt, und bei dem die kreisförmige Kontaktlinie zwischen dem Boden (5) des Sockels (2) und dem ringförmigen Kragen (21) durch einen ringförmigen Wulst (41 a) erzielt wird, der sich axial von der unteren Fläche (21 a) des ringförmigen Kragens (21) erstreckt und eine flache Fläche (5a) des Bodens (5) des Sockels (2) berührt.

8. Filter nach Anspruch 7, bei dem die ringförmigen Wülste (41 a, 41 b), die sich axial von dem ringförmigen Kragen (21) erstrecken, aus einem Werkstoff bestehen, der in zwei ringförmigen Rillen (42a, 42b), die zu beiden Seiten des ringförmigen Kragens (21) ausgebildet sind, angewandt wird.

9. Filter nach einem der vorhergehenden Ansprüche, bei dem der Entleerungsverschluss (19) axial zu der oberen Stellung von einer Druckfeder (30), die um den Entleerungsverschluss (19) angeordnet und axial zwischen einer ringförmigen Schale (31), die im Inneren des Flüssigkeitsausgangskanals (7) befestigt ist, und dem ringförmigen Kragen (21) des Entleerungsverschlusses (19) angeordnet ist, beansprucht wird.

10. Filter nach einem der vorhergehenden Ansprüche, bei dem die Breite (Lg) jeder kreisförmigen Kontaktlinie kleiner ist als 3 Millimeter.
